(19) Europäisches Patentamt
European Patent Office
Office européen des brevets

(11) Veröffentlichungsnummer : **0 051 742**
**B1**

(12) **EUROPÄISCHE PATENTSCHRIFT**

(45) Veröffentlichungstag der Patentschrift : **09.01.85**

(51) Int. Cl.[4] : **C 07 D417/12**, A 01 N 43/82

(21) Anmeldenummer : **81107904.5**

(22) Anmeldetag : **05.10.81**

(54) **2-(N-Aryl-N-1,2,3-thiadiazolylcarbonyl)-aminobutyrolactone, Verfahren zu ihrer Herstellung, diese enthaltende fungizide Mittel und ihre Anwendung als Fungizide.**

(30) Priorität : **08.11.80 DE 3042195**

(43) Veröffentlichungstag der Anmeldung : **19.05.82 Patentblatt 82/20**

(45) Bekanntmachung des Hinweises auf die Patenterteilung : **09.01.85 Patentblatt 85/02**

(84) Benannte Vertragsstaaten : **AT BE CH DE FR GB IT LI LU NL SE**

(56) Entgegenhaltungen :
**DE-A- 2 804 299**
**US-A- 3 933 860**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Ammermann, Eberhard, Dr.**
**Sachsenstrasse 3**
**D-6700 Ludwigshafen (DE)**
Erfinder : **Zeeh, Bernd, Dr.**
**Thorwaldsenstrasse 5**
**D-6700 Ludwigshafen (DE)**
Erfinder : **Hamprecht, Gerhard, Dr.**
**Rote-Turm-Strasse 28**
**D-6940 Weinheim (DE)**
Erfinder : **Pommer, Ernst-Heinrich, Dr.**
**Berliner Platz 7**
**D-6703 Limburgerhof (DE)**

**EP 0 051 742 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue 2-(N-Aryl-N-1,2,3-thiadiazolylcarbonyl)-aminobutyrolactone, Verfahren zu ihrer Herstellung, Fungizide, die diese Verbindungen als Wirkstoffe enthalten, sowie Verfahren zur Bekämpfung von Schadpilzen mit den Wirkstoffen.

2-(N-Aryl-N-arylcarbonyl)-aminobutyrolactone, die fungizid wirksam sind, z. B. das 2-(N-2,6-Dimethyl-phenyl-, N-3,4-dichlorphenylcarbonyl)-aminobutyrolacton sind aus der US-A-3 933 860 bekannt (Beispiel 2 der Patentschrift). Die Wirkung dieser Verbindung gegen niedere Pilze wie Phytophthora ist jedoch unzureichend. Es ist ferner bekannt, N-Trichlormethylthiotetrahydrophthalimid als Fungizid zu verwenden (Chemical Week, June 21, 1972, Seite 46). Seine fungizide Wirkung ist jedoch unzureichend.

Es ist bekannt, N-Butyrolacton-N-tetrahydrofuroylanilide, z. B. das 2,6-Dimethyl-N-(3-tetrahydrofuran-2-on)-2-tetrahydrofuroylanilid, als Fungizide zu verwenden (DE-A-2 804 299). Die neuen Verbindungen werden hierdurch nicht nahegelegt, da sie weder den Tetrahydrofuroylrest noch einen anderen Acylrest mit einem anderen sauerstoffhaltigen Heterocyclus enthalten.

Es wurde nun gefunden, daß 2-(N-Aryl-N-1,2,3-thiadiazolylcarbonyl)-aminobutyrolactone der allgemeinen Formel I

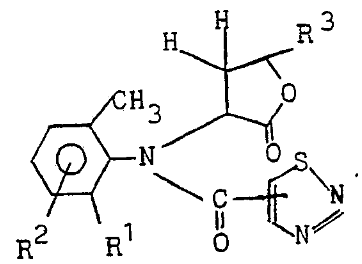

(I)

in der

$R^1$ Wasserstoff, $C_1$-$C_3$-Alkyl, Halogen

$R^2$ Wasserstoff, Methyl, und

$R^3$ Wasserstoff oder Methyl bedeuten

fungizid ausgezeichnet wirksam sind und den bekannten 2-(N-Aryl, N-arylcarbonyl)-aminobutyrolactonen in ihrer Wirkung, insbesondere gegen Phytophthora, überlegen sind.

Die 2-(N-Aryl-N-1,2,3-thiadiazolylcarbonyl)-aminobutyrolactone der Formel I besitzen im C-Atom 2 und gegebenenfalls im C-Atom 4 des Butyrolactonringes Asymmetriezentren. Sie bilden daher Enantiomere.

Die optisch reinen Enantiomeren können nach üblichen Methoden erhalten werden. Fungizid wirksam sind sowohl die bei der Synthese üblicherweise anfallenden Gemische als auch die reinen Enantiomeren. Von der Erfindung werden sowohl die reinen Enantiomeren als auch ihre Gemische umfaßt.

Die 2-(N-Aryl-N-1,2,3-thiadiazolylcarbonyl)-aminobutyrolactone der Formel I können durch Umsetzung eines 2-(N-Aryl)-aminobutyrolactons der Formel II

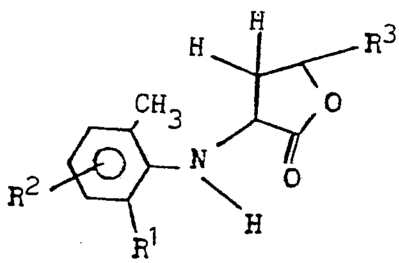

(II)

in der $R^1$, $R^2$ und $R^3$ die oben genannten Bedeutungen haben, mit einem Carbonsäurederivat der Formel III

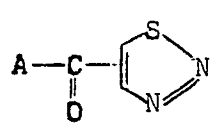

(III)

in der für A eine nucleophil verdrängbare Abgangsgruppe steht, gegebenenfalls in Gegenwart eines Lösungs- oder Verdünnungsmittels, gegebenenfalls in Anwesenheit anorganischer oder organischer

Basen und gegebenenfalls in Anwesenheit eines Reaktionsbeschleunigers bei einer Temperatur zwischen 0 und 120 °C erhalten werden.

In Formel III bedeutet A beispielsweise Halogen, wie Chlor oder Brom ; Alkoxycarbonyloxyreste, wie Methoxycarbonyloxy oder Ethoxycarbonyloxy, oder den Benzyloxycarbonyloxyrest oder einen Azolylrest, wie den Imidazolyl- oder einen Triazolylrest.

Die Umsetzung kann in Gegenwart eines Lösungs- oder Verdünnungsmittels durchgeführt werden. Zu den bevorzugten Lösungs- bzw. Verdünnunngsmitteln gehören Halogenkohlenwasserstoffe, beispielsweise Methylenchlorid, Chloroform, 1,2-Dichlorethan, Chlorbenzol ; aliphatische oder aromatische Kohlenwasserstoffe, wie Cyclohexan, Petrolether, Benzol, Toluol oder Xylole ; Ester wie Essigsäureethylester ; Nitrile wie Acetonitril ; Sulfoxide wie Dimethylsulfoxid ; Ketone wie Aceton oder Methylethylketon ; Ether wie Diethylether, Tetrahydrofuran oder Dioxan oder Gemische dieser Flüssigkeiten.

Zweckmäßig verwendet man das Lösungs- bzw. Verdünnungsmittel in einer Menge von 100 bis 2 000 Gew.-%, vorzugsweise 100 bis 1 000 Gew.-%, bezogen auf den Ausgangsstoff der Formel II.

Geeignete anorganische oder organische Basen, die gegebenenfalls als säurebindende Mittel dem Reaktionsgemisch zugesetzt werden können, sind beispielsweise Alkalicarbonate, wie Kalium- oder Natriumcarbonat ; Alkalihydride, wie Natriumhydrid ; tertiäre Amine, wie Trimethylamin, Triäthylamin, N,N-Dimethylanilin, N,N-Dimethylcyclohexylamin, N-Methylpiperidin oder Pyridin ; Azole, wie 1,2,4-Triazol oder Imidazol. Es können aber auch andere übliche Basen verwendet werden.

Als Reaktionsbeschleuniger kommen vorzugsweise Metallhalogenide, wie Natriumbromid oder Kaliumjodid, Azole, wie Imidazol oder 1,2,4-Triazol oder Pyridine, wie 4-Dimethylaminopyridin oder Mischungen dieser Substanzen in Betracht. Zweckmäßig setzt man auf 1 Mol Anilinderivat der Formel II 0,9 bis 1,3 Mol Säurederivat der Formel III sowie gegebenenfalls 0,5 bis 2 Mol Base und gegebenenfalls 0,01 bis 0,1 Mol Reaktionsbeschleuniger ein.

Die Umsetzung wird im allgemeinen bei einer Temperatur im Bereich zwischen 0 und 120 °C in einem Zeitraum von 1 bis 60 Stunden, drucklos oder unter Druck, kontinuierlich oder diskontinuierlich durchgeführt.

In einer bevorzugten Form des erfindungsgemäßen Verfahrens vermischt man den Ausgangsstoff der Formel II gegebenenfalls mit einer Base und gegebenenfalls mit einem Verdünnungsmittel, gibt dann das Säurederivat der Formel III und gegebenenfalls den Reaktionsbeschleuniger zu und hält das Reaktionsgemisch für 0,5 bis 12, vorzugsweise 1 bis 6 Stunden bei der Reaktionstemperatur, die zwischen 0 und 120 °C liegen kann.

Zur Isolierung der neuen Verbindungen wird beispielsweise, falls vorhanden, das Verdünnungsmittel entfernt, der Rückstand dann in einem organischen Lösungsmittel gelöst und die Lösung mit verdünnter Säure, dann mit wäßriger verdünnter Lauge sowie mit Wasser gewaschen, um die überschüssige Base und die Ausgangsstoffe II und III zu entfernen.

Die nach dem Abdestillieren des Lösungsmittels verbleibenden Produkte bedürfen im allgemeinen keiner weiteren Reinigung, können aber, falls erforderlich, nach bekannten Methoden, beispielsweise durch Umkristallisation, Extraktion oder Chromatographie, weiter gereinigt werden.

Die Aniline der Formel II sind bekannt (DE-A-2 845 454) oder können nach bekannten Verfahren hergestellt werden.

Auch die als Ausgangsstoff eingesetzten Carbonsäurederivate der Formel III sind bekannt oder können nach bekannten Methoden hergestellt werden : J. Amer. Chem. Soc. *77,* 5359 (1955), J. Chem. Soc. *1965,* 5166.

Das folgende Beispiel erläutert die Herstellung der 2-(N-Aryl-N-1,2,3-thiadiazolylcarbonyl)-aminobutyrolactone der Formel I.

Beispiel 1

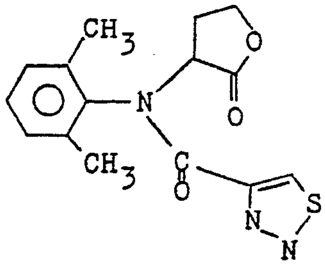

Zu einer Suspension von 20,5 g 2-(N-2,6-Dimethylphenyl)-aminobutyrolacton, 20,7 g Kaliumcarbonat und 0,1 g 4-Dimethylaminopyridin in 200 ml Methylenchlorid wird unter Rühren eine Lösung von 14,8 g 1,2,3-Thiadiazol-4-carbonsäurechlorid in 50 ml Methylenchlorid getropft und über Nacht bei Zimmertemperatur gerührt. Nach dem Abtrennen der anorganischen Salze wird die organische Phase dreimal mit Wasser gewaschen, getrocknet und eingeengt. Durch Umkristallisieren aus Diethylether werden 22 g 2-(N-2,6-Dimethylphenyl-N-1,2,3-thiadiazol-4-ylcarbonyl)-aminobutyrolacton vom Schmelzpunkt 169-174 °C erhalten.

Entsprechend lassen sich beispielsweise folgende Verbindungen der Formel I herstellen :

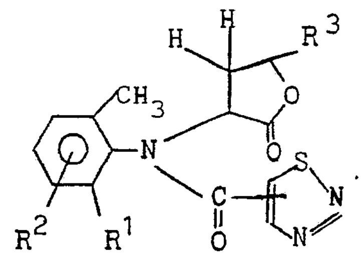

(I)

Tabelle 1

| Nr. | $R^1$ | $R^2$ | Heterocyclischer Rest | $R^3$ | Phys. Daten Fp (°C) |
|---|---|---|---|---|---|
| 2 | Cl | H | 1,2,3-Thiadiazol-4-yl | H | 162 - 170 |
| 3 | $CH_3$ | H | " | $CH_3$ | 126 - 128 |
| 4 | $CH_3$ | 3-$CH_3$ | " | H | 152 - 155 |
| 5 | $C_2H_5$ | H | " | H | 124 - 127 |
| 6 | H | H | " | H | 143 |
| 7 | $CH_3$ | H | 1,2,3-Thiadiazol-5-yl | H | 206 - 208 |
| 8 | Cl | H | " | H | |

Die neuen Wirkstoffe weisen eine starke fungitoxische Wirkung auf. Sie sind geeignet zur Bekämpfung phytopathogener Pilze. Sie schädigen Kulturpflanzen in den zur Bekämpfung von Pilzen und Bakterien notwendigen Konzentrationen nicht. Aus diesen Gründen sind sie für den Gebrauch als Pflanzenschutzmittel zur Bekämpfung von Pilzen geeignet.

Sie sind beispielsweise geeignet zur Bekämpfung von Phytophthora cactorum an Äpfeln, Phytophthora infestans an Tomaten und Kartoffeln, Phytophthora parasitica an Erdbeeren, Pseudoperonospora cubensis an Gurken, Pseudoperonospora humuli an Hopfen, Peronospora destructor an Zwiebeln, Peronospora viticola an Reben, Plasmopara halstedii an Sonnenblumen, Sclerospora macrospora an Mais, Bremia lactucae an Salat.

Die Aufwandmengen liegen je nach Art des gewünschten Effektes zwischen 0,025 und 5 kg Wirkstoff je ha. Ein Teil der Wirkstoffe zeigt kurative Eigenschaften, d. h. die Anwendung der Mittel kann noch nach erfolgter Infektion der Pflanzen durch die Krankheitserreger vorgenommen werden, um einen sicheren Bekämpfungserfolg zu erzielen. Darüber hinaus sind viele der neuen Verbindungen systemisch wirksam, so daß über die Wurzelbehandlung auch ein Schutz oberirdischer Pflanzen möglich ist.

Ferner lassen sich mit den neuen Verbindungen auch Pilze, die Keimlings- und Auflaufkrankheiten hervorrufen, beispielsweise Pythium- und Aphanomyces-Arten an Leguminosen und Baumwolle, bekämpfen. Die Aufwandmengen betragen je 100 kg Saatgut 10 bis 200 g Wirkstoff ; die Anwendung erfolgt in Form von Saatgutbeizmitteln. Die Verbindungen werden angewendet, indem man die Pflanzen mit den Wirkstoffen behandelt. Die Anwendung erfolgt vor oder nach der Infektion der Pflanzen oder Samen durch die Pilze.

Die neuen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken ; sie sollen in jedem Fall eine feine und gleichmäßige Verteilung der wirksamen Substanz gewährleisten. Die Formulierungen werden in bekannter Weise hergestellt, z. B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage : Lösungsmittel wie Aromaten (z. B. Xylol, Benzol), chlorierte Aromaten (z. B. Chlorbenzole), Paraffine (z. B. Erdölfraktionen), Alkohole (z. B. Methanol, Butanol), Amine oder Amide (z. B. Ethanolamin, Dimethylformamid) und Wasser ; Trägerstoffe

wie natürliche Gesteinsmehle, z. B. Kaoline, Tonerden, Talkum, Kreide und synthetische Gesteinsmehle (z. B. hochdisperse Kieselsäure, Silikate) ; Emulgiermittel, wie nichtionogene und anionische Emulgatoren (z. B. Polyoxyethylen — Fettalkohole — Ether, Alkylsulfonate und Arylsulfonate) und Dispergiermittel, wie Lignin, Sulfitablaugen und Methylcellulose.

Die fungiziden Mittel enthalten 0,1 bis 95 Gew.-% Wirkstoff, vorzugsweise 0,5 bis 90 Gew.-%.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweise durch Versprühen, Vernbeln, Verstäuben, Verstreuen, Beizen oder Gießen.

Beispiele für solche Zubereitungen sind :

I. Man vermischt 90 Gewichtsteile des Wirkstoffs Nr. 1 mit 10 Gewichtsteilen N-Methyl-alphapyrrolidon und erhält eine Lösung, die zur Anwendung in Form kleinster Tropfen geeignet ist.

II. 10 Gewichtsteile des Wirkstoffs Nr. 1 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht. Durch Ausgießen und feines Verteilen der Lösung in Wasser erhält man eine wäßrige Dispersion.

III. 20 Gewichtsteile des Wirkstoffs Nr. 5 werden in einer Mischung gelöst, die aus 40 Gewichtsteilen Cyclohexanon, 30 Gewichtsteilen Isobutanol, 20 Gewichtsteilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

IV. 20 Gewichtsteile des Wirkstoffs Nr. 2 werden in einer Mischung gelöst, die aus 25 Gewichtsteilen Cyclohexanol, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

V. 80 Gewichtsteile des Wirkstoffs Nr. 5 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfitablauge und 7 Gewichtsteilen pulverförmigem Kieselsäuregel gut vermischt und in einer Hammermühle vermahlen. Durch feines Verteilen der Mischung in Wasser erhält man eine Spritzbrühe.

VI. 3 Gewichtsteile des Wirkstoffs Nr. 3 werden mit 97 Gewichtsteilen feinteiligem Kaolin innig vermischt. Man erhält auf diese Weise ein Stäubemittel, das 3 Gew.-% des Wirkstoffs enthält.

VII. 30 Gewichtsteile des Wirkstoffs Nr. 4 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gewichtsteile des Wirkstoffs Nr. 2 werden mit 10 Teilen Natriumsalz eines Phenolsulfonsäure-harnstoff-formaldehyd-Kondensates, 2 Teilen Kieselgel und 48 Teilen Wasser innig vermischt. Man erhält eine stabile wäßrige Dispersion. Durch Verdünnen mit Wasser erhält man eine wäßrige Dispersion.

IX. 20 Teile des Wirkstoffs Nr. 4 werden mit 2 Teilen Calciumsalz der Dodecylbenzolsulfonsäure, 8 Teilen Fettalkohol-polyglykolether, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

Die erfindungsgemäßen Mittel können in diesen Anwendungsformen auch zusammen mit anderen Wirkstoffen vorliegen, wie z. B. Herbiziden, Insektiziden, Wachstumsregulatoren und anderen Fungiziden oder auch mit Düngemitteln vermischt und ausgebracht werden. Beim Vermischen mit Fungiziden erhält man dabei in vielen Fällen eine Vergrößerung des fungiziden Wirkungsspektrums.

Die folgende Liste von Fungiziden, mit denen die erfindungsgemäßen Verbindungen kombiniert werden können, soll die Kombinationsmöglichkeiten erläutern.

Fungizide, die mit den erfindungsgemäßen Verbindungen kombiniert werden können, sind beispielsweise :

Dithiocarbamate und deren Derivate, wie
Ferridimethyldithiocarbamat,
Zinkdimethyldithiocarbamat,
Manganethylenbisdithiocarbamat,
Mangan-Zink-ethylendiamin-bis-dithiocarbamat,
Zinkethylenbisdithiocarbamat,
Tetramethylthiuramidsulfide,
Ammoniak-Komplex von Zink-(N,N-ethylen-bis-dithiocarbamat)
und
N,N'-Polyethylen-bis-(thiocarbamoyl)-disulfid,
Zink-(N,N'-propylen-bis-dithiocarbamat),
Ammoniak-Komplex von Zink-(N,N'-propylen-bis-dithiocarbamat) und
N,N'-Propylen-bis-(thiocarbamoyl)-disulfid ;

Nitroderivate, wie
Dinitro-(1-methylheptyl)-phenylcrotonat,
2-sec-Butyl-4,6-dinitrophenyl-3,3-dimethylacrylat,
2-sec-Butyl-4,6-dinitrophenyl-isopropylcarbonat ;

heterocyclische Substanzen, wie
N-Trichlormethylthio-tetrahydrophthalimid,
N-(1,1,2,2-Tetrachlorethylthio)-tetrahydrophthalimid,
N-Trichlormethylthio-phthalimid,
2-Heptadecyl-2-imidazolin-acetat,
2,4-Dichlor-6-(o-chloranilino)-s-triazin,
O,O-Diethyl-phthalimidophosphonothioat,
5-Amino-1-(bis-dimethylamino)-phosphinyl)-3-phenyl-1,2,4-triazol,
5-Ethoxy-3-trichlormethyl-1,2,4-thiadiazol,
2,3-Dicyano-1,4-dithioanthrachinon,
2-Thio-1,3-dithio-(4,5-b)-chinoxalin,
1-(Butylcarbamoyl)-2-benzimidazol-carbaminsäuremethylester,
2-Methoxycarbonylamino-benzimidazol,
2-Rhodanmethylthio-benzthiazol,
4-(2-Chlorphenylhydrazono)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin-4,4-dioxid,
2,3-Dihydro-5-carboxanilido-6-methyl-1,4-oxathiin,
2-(Furyl(2))-benzimidazol,
Piperazin-1,4-diyl-bis-(1-(2,2,2-trichlor-ethyl)-formamid),
2-(Thiazolyl-(4))-benzimidazol,
5-Butyl-2-dimethylamino-4-hydroxy-6-methyl-pyrimidin,
Bis-(p-Chlorphenyl)-pyridinmethanol,
1,2-Bis-(3-ethoxycarbonyl-2-thioureido)-benzol,
1,2-Bis-(3-methoxycarbonyl-2-thioureido)-benzol

und verschiedene Fungizide, wie
Dodecylguanidinacetat,
3-(3-(3,5-Dimethyl-2-oxycyclohexyl)-2-hydroxyethyl)-glutarimid,
Hexachlorbenzol,
N-Dichlorfluormethylthio-N',N'-dimethyl-N-phenyl-schwefelsäurediamid,
2,5-Dimethyl-furan-3-carbonsäureanilid,
2,5-Dimethyl-furan-3-carbonsäure-cyclohexylamid,
2-Methyl-benzoesäure-anilid,
2-Jod-Benzoesäure-anilid,
1-(3,4-Dichloranilino)-1-formylamino-2,2,2-trichlorethan,
2,6-Dimethyl-N-tridecyl-morpholin bzw. dessen Salze,
2,6-Dimethyl-N-cyclododecyl-morpholin bzw. dessen Salze,

5-Nitro-isophthalsäure-di-isopropylester,
1-(1',2',4'-Triazolyl-1')-[1-(4'-chlorphenoxy)]-3,3-dimethylbutan-2-on,
1-(1,2'-4'-triazolyl-1')-[1-(4'-chlorphenoxy)]-3,3-dimethylbutan-2-ol,
N-(n-Propyl)-N-(2,4,6-trichlorphenoxyethyl)-N'-imidazolylharnstoff,
N-Cyclohexyl-N-methoxy-2,5-dimethyl-furan-3-carbonsäureamid,
2,4,5-Trimethyl-furan-3-carbonsäureanilid,
5-Methyl-5-vinyl-3-(3,5-dichlorphenyl)-2,4-dioxo-1,3-oxazolidin,
5-Methoxymethyl-5-methyl-3-(3,5-dichlorphenyl)-2,4-dioxo-1,3-oxazolidin,
N-[3-(p-tert.-Butylphenyl)-2-methyl-propyl]-cis-2,6-dimethylmorpholin.

Die folgenden Versuche erläutern die fungizide Wirksamkeit der neuen Verbindungen.

Als Vergleichsmittel wurden das bekannte N-Trichlormethylthiotetrahydrophthalimid (A) sowie die in der US-A-3 933 860, Beispiel 2, beschriebene Substanz 2-(N-2,6-Dimethyl-phenyl-N-3,4-dichlorphenylcarbonyl)-aminobutyrolacton (B) verwendet.

## Versuch 1

Wirksamkeit gegen Phytophthora infestans an Tomaten

Blätter von Tomatenpflanzen der Sorte « Professor Rudloff » werden mit wäßrigen Suspensionen, die 80 % (Gewichtsprozent) des zu prüfenden Wirkstoffes und 20 % Natriumligninsulfonat in der Trockensubstanz enthalten, besprüht. Es werden 0,025 und 0,006 %ige Spritzbrühen (berechnet auf die Trockensubstanz) verwendet. Nach dem Antrocknen des Spritzbelages werden die Blätter mit einer Zoosporenaufschwemmung des Pilzes Phytophthora infestans infiziert. Die Pflanzen werden dann in einer wasserdampfgesättigten Kammer bei Temperaturen zwischen 16 und 18 °C aufgestellt. Nach 5 Tagen hat sich die Krankheit auf den unbehandelten, jedoch infizierten Kontrollpflanzen so stark entwickelt, daß die fungizide Wirksamkeit der Substanzen beurteilt werden kann.

Bei dem Versuch zeigten die Wirkstoffe Nr. 1, 2, 3 und 4 eine bessere fungizide Wirksamkeit als der bekannte Wirkstoff B entsprechend Beispiel 2 der US-A-3 933 860.

Versuch 2

Fungizide Wirksamkeit gegen Plasmopara viticola an Reben

Blätter von Topfreben der Sorte Müller-Thurgau werden mit wäßrigen Dispersionen, die 80 % (Gew.-%) des zu prüfenden Wirkstoffes und 20 % Natriumligninsulfonat in der Trockensubstanz enthalten, besprüht. Es werden 0,025- und 0,006 %ige Spritzbrühen (bezogen auf die Trockensubstanz) verwendet.

Nach dem Antrocknen des Spritzbelages werden die Blätter mit einer Zoosporenaufschwemmung von Plasmopara viticola infiziert. Die Pflanzen kommen dann zuerst für 16 Stunden in eine wasserdampfgesättigte (feuchte) Kammer bei 20 °C und anschließend 8 Tage in ein Gewächshaus mit Temperaturen zwischen 20 und 30 °C. Nach dieser Zeit werden die Pflanzen zur Beschleunigung und Verstärkung des Sporangienträgerausbruches abermals während 16 Stunden in der feuchten Kammer aufgestellt. Dann erfolgt die Beurteilung des Blattbefalls auf den Blattunterseiten. Als Vergleich dienen unbehandelte infizierte Kontrollpflanzen.

Bei dem Versuch zeigten die Wirkstoffe 2, 3, 4 und 5 eine gute fungizide Wirksamkeit.

Versuch 3

Fungizide Wirksamkeit gegen Auflaufkrankheiten an Erbsen

100-g-Proben Erbsensamen der Sorte « Senator » werden in Glasflaschen etwa 5 Minuten lang mit 300 mg (= 0,3 Gew.-%) Beizmittelaufbereitungen, die 40 % Wirkstoff in der Trockensubstanz enthalten, sorgfältig geschüttelt. Danach werden jeweils 100 Samen in Saatkisten 3 cm tief und mit einem Abstand von 3 bis 5 cm in eine Komposterde eingesät, die eine starke natürliche Verseuchung mit den Pilzen Pythium spec., Aphanomyces spec. und Fusarium oxysporum aufweist. Die Kästen werden im Gewächshaus bei Temperaturen von 17 bis 20 °C aufgestellt. Nach einer Versuchsdauer von 21 Tagen wird die Anzahl gesunder Erbsenpflanzen ermittelt.

Bei dem Versuch zeigten die Wirkstoffe 1 und 2 eine bessere fungizide Wirksamkeit als die bekannten Wirkstoffe A und B. Nach der Behandlung mit den Wirkstoffen 1 und 2 wurden fast ebensoviele gesunde Erbsenpflanzen ermittelt wie in sterilisierter Komposterde.

**Ansprüche** (für die Vertragsstaaten : BE, CH, DE, FR, GB, IT, LI, LU, NL, SE)

1. 2-(N-Aryl-N-1,2,3-thiadiazolylcarbonyl)-aminobutyrolacton der Formel I

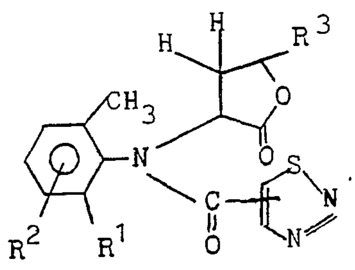

(I)

in der

$R^1$ Wasserstoff, $C_1$-$C_3$-Alkyl, Halogen

$R^2$ Wasserstoff, Methyl, und

$R^3$ Wasserstoff oder Methyl bedeuten.

2. Fungizide Mittel, enthaltend ein 2-(N-Aryl-N-1,2,3-thiadiazolylcarbonyl)-aminobutyrolacton gemäß Anspruch 1 sowie übliche Zusätze.

3. Fungizide Mittel, enthaltend einen festen oder flüssigen Trägerstoff und ein 2-(N-Aryl-N-1,2,3-thiadiazolylcarbonyl)-aminobutyrolacton gemäß Anspruch 1.

4. Verfahren zur Herstellung von fungiziden Mitteln, dadurch gekennzeichnet, daß man einen festen oder flüssigen Trägerstoff mit einem 2-(N-Aryl-N-1,2,3-thiadiazolylcarbonyl)-aminobutyrolacton gemäß Anspruch 1 vermischt.

5. Verfahren zur Bekämpfung von phytopathogenen Pilzen, dadurch gekennzeichnet, daß man die Pilze oder die vor Pilzbefall zu schützenden Gegenstände mit einem 2-(N-Aryl-N-1,2,3-thiadiazolylcarbonyl)-aminobutyrolacton gemäß Anspruch 1 behandelt.

6. Verfahren zur Herstellung eines 2-(N-Aryl-N-1,2,3-thiadiazolylcarbonyl)-aminobutyrolactons gemäß Anspruch 1, dadurch gekennzeichnet, daß man ein 2-(N-Aryl)-aminobutyrolacton der Formel II

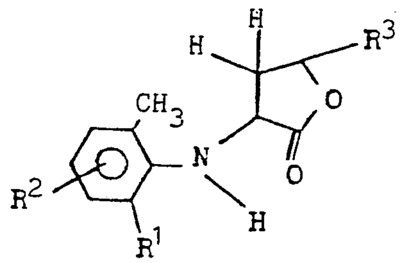

(II)

in der $R^1$, $R^2$ und $R^3$ die oben genannten Bedeutungen haben, mit einem Carbonsäurederivat der Formel III

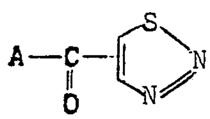

(III)

in der für A eine nucleophil verdrängbare Abgangsgruppe steht, gegebenenfalls in Gegenwart eines Lösungs- oder Verdünnungsmittels, gegebenenfalls in Anwesenheit anorganischer oder organischer Basen und gegebenenfalls in Anwesenheit eines Reaktionsbeschleunigers bei einer Temperatur zwischen 0 und 120 °C umsetzt.

7. 2-(N-Aryl-N-1,2,3-thiadiazolylcarbonyl)-aminobutyrolacton, gemäß Anspruch 1, ausgewählt aus der Gruppe bestehend aus 2-(N-2,6-Dimethylphenyl-N-1,2,3-thiadiazol-4-yl-carbonyl)-aminobutyrolacton und 2-(N-2-Methyl-6-chlorphenyl-N-1,2,3-thiadiazol-4-yl-carbonyl)-aminobutyrolacton.

8. Fungizide Mittel gemäß Anspruch 2, enthaltend ein 2-(N-Aryl-N-1,2,3-thiadiazolylcarbonyl)-aminobutyrolacton, ausgewählt aus der Gruppe bestehend aus 2-(N-2,6-Dimethylphenyl-N-1,2,3-thiadiazol-4-yl-carbonyl)-aminobutyrolacton und 2-(N-2-Methyl-6-chlorphenyl-N-1,2,3-thiadiazol-4-yl-carbonyl)-aminobutyrolacton.

**Ansprüche** (für den Vertragsstaat AT)

1. Fungizide Mittel, enthaltend ein 2-(N-Aryl-N-1,2,4-thiadiazolylcarbonyl)-aminobutyrolacton der Formel I

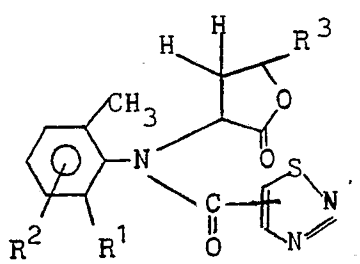

(I)

in der
$R^1$ Wasserstoff, $C_1$-$C_3$-Alkyl, Halogen
$R^2$ Wasserstoff, Methyl, und
$R^3$ Wasserstoff oder Methyl bedeuten, sowie übliche Zusätze.

2. Fungizid, enthaltend einen festen oder flüssigen Trägerstoff und ein 2-(N-Aryl-N-1,2,3-thiadiazolylcarbonyl)-aminobutyrolacton gemäß Anspruch 1.

3. Verfahren zur Herstellung von fungiziden Mitteln, dadurch gekennzeichnet, daß man einen festen oder flüssigen Trägerstoff mit einem 2-(N-Aryl-N-1,2,3-thiadiazolylcarbonyl)-aminobutyrolacton gemäß Anspruch 1 vermischt.

4. Verfahren zur Bekämpfung von phytopathogenen Pilzen, dadurch gekennzeichnet, daß man die Pilze oder die vor Pilzbefall zu schützenden Gegenstände mit einem 2-(N-Aryl-N-1,2,3-thiadiazolylcarbonyl)-aminobutyrolacton gemäß Anspruch 1 behandelt.

5. Verfahren zur Herstellung eines 2-(N-Aryl-N-1,2,3-thiadiazolylcarbonyl)-aminobutyrolactons gemäß Anspruch 1, dadurch gekennzeichnet, daß man ein 2-(N-Aryl)-aminobutyrolacton der Formel II

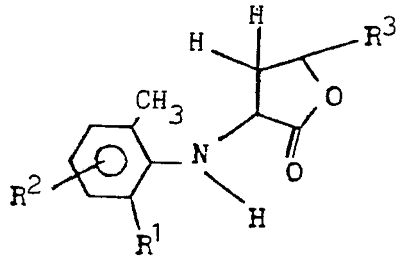

(II)

in der $R^1$, $R^2$ und $R^3$ die oben genannten Bedeutungen haben, mit einem Carbonsäurederivat der Formel III

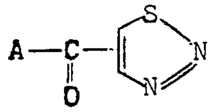

(III)

in der für A eine nucleophil verdrängbare Abgangsgruppe steht, gegebenenfalls in Gegenwart eines Lösungs- oder Verdünnungsmittels, gegebenenfalls in Anwesenheit anorganischer oder organischer Basen und gegebenenfalls in Anwesenheit eines Reaktionsbeschleunigers bei einer Temperatur zwischen 0 und 120 °C umsetzt.

6. Fungizide Mittel gemäß Anspruch 1, enthaltend ein 2-(N-Aryl-N-1,2,3-thiadiazolylcarbonyl)-aminobutyrolacton, ausgewählt aus der Gruppe bestehend aus 2-(N-2,6-Dimethylphenyl-N-1,2,3-thiadiazol-4-yl-carbonyl)-aminobutyrolacton und 2-(N-2-Methyl-6-chlorphenyl-N-1,2,3-thiadiazol-4-yl-carbonyl)-aminobutyrolacton.

**Claims** (for the Contracting States : BE, CH, DE, FR, GB, IT, LI, LU, NL, SE)

1. A 2-(N-aryl-N-1,2,3-thiadiazolylcarbonyl)-aminobutyrolactone of the formula I

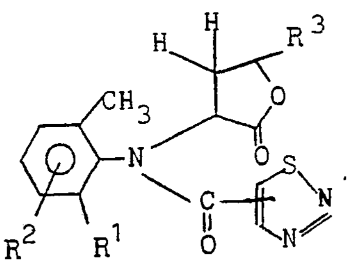

(I)

where

$R^1$ is hydrogen, $C_1$-$C_3$-alkyl or halogen,

$R^2$ is hydrogen or methyl, and

$R^3$ is hydrogen or methyl.

2. A fungicidal agent containing a 2-(N-aryl-N-1,2,3-thiadiazolylcarbonyl)-aminobutyrolactone as claimed in claim 1 and conventional additives.

3. A fungicidal agent containing a solid or liquid carrier and a 2-(N-aryl-N-1,2,3-thiadiazolylcarbonyl)-aminobutyrolactone as claimed in claim 1.

4. A process for producing a fungicidal agent, wherein a solid or liquid carrier is mixed with a 2-(N-aryl-N-1,2,3-thiadiazolylcarbonyl)-aminobutyrolactone as claimed in claim 1.

5. A process for combating phytopathogenic fungi, wherein the fungi or the objects to be protected against fungus attack are treated with a 2-(N-aryl-N-1,2,3-thiadiazolylcarbonyl)-aminobutyrolactone as claimed in claim 1.

6. A process for preparing a 2-(N-aryl-N-1,2,3-thiadiazolylcarbonyl)-aminobutyrolactone as claimed in claim 1, wherein a 2-(N-aryl-aminobutyrolactone of the formula II

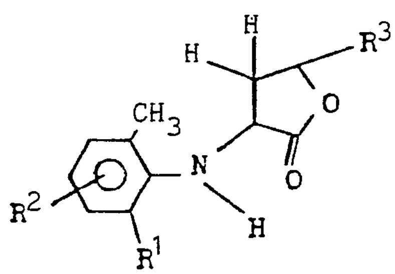

(II)

where $R^1$, $R^2$ and $R^3$ have the above meanings, is reacted with a carboxylic acid derivative of the formula III

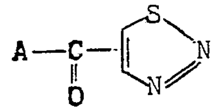

(III)

where A is a nucleophilically displaceable leaving group, in the presence or absence of a solvent or diluent, in the presence or absence of an inorganic or organic base, and in the presence or absence of a reaction accelerator, at from 0 to 120 °C.

7. A 2-(N-aryl-N-1,2,3-thiadiazolylcarbonyl)-aminobutyrolactone, as claimed in claim 1, selected from the group consisting of 2-(N-2,6-dimethylphenyl-N-1,2,3-thiadiazol-4-ylcarbonyl)-aminobutyrolactone and 2-(N-2-methyl-6-chlorophenyl-N-1,2,3-thiadiazol-4-ylcarbonyl)-aminobutyrolactone.

8. A fungicidal agent, as claimed in claim 2, containing a 2-(N-aryl-1,2,3-thiadiazolylcarbonyl)-aminobutyrolactone selected from the group consisting of 2-(N-2,6-dimethylphenyl-N-1,2,3-thiadiazol-4-ylcarbonyl)-aminobutyrolactone and 2-(N-2-methyl-6-chlorophenyl-N-1,2,3-thiadiazol-4-ylcarbonyl)-aminobutyrolactone.

**Claims** (for the Contracting State AT)

1. A fungicidal agent containing a 2-(N-aryl-N-1,2,3-thiadiazolylcarbonyl)-aminobutyrolactone of the formula I

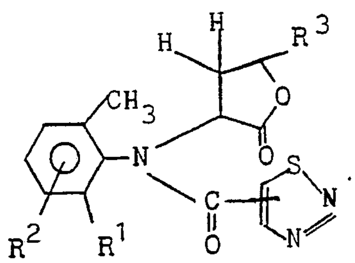

(I)

where
$R^1$ is hydrogen, $C_1$-$C_3$-alkyl or halogen,
$R^2$ is hydrogen or methyl, and
$R^3$ is hydrogen or methyl, and conventional additives.

2. A fungicidal agent containing a solid or liquid carrier and a 2-(N-aryl-N-1,2,3-thiadiazolylcarbonyl)-aminobutyrolactone as defined in claim 1.

3. A process for producing a fungicidal agent, wherein a solid or liquid carrier is mixed with a 2-(N-aryl-N-1,2,3-thiadiazolylcarbonyl)-aminobutyrolactone as defined in claim 1.

4. A process for combating phytopathogenic fungi, wherein the fungi or the objects to be protected against fungus attack are treated with a 2-(N-aryl-N-1,2,3-thiadiazolylcarbonyl)-aminobutyrolactone as defined in claim 1.

5. A process for preparing a 2-(N-aryl-N-1,2,3-thiadiazolylcarbonyl)-aminobutyrolactone as defined in claim 1, wherein a 2-(N-aryl-aminobutyrolactone) of the formula II

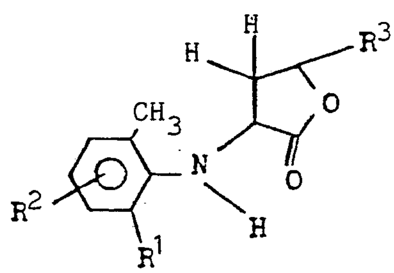

(II)

where $R^1$, $R^2$ and $R^3$ have the above meanings, is reacted wich a carboxylic acid derivative of the formula III

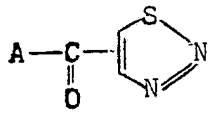

(III)

where A is a nucleophilically displaceable leaving group, in the presence or absence of a solvent or diluent, in the presence or absence of an inorganic or organic base, and in the presence or absence of a reaction accelerator, at from 0 to 120 °C.

6. A fungicidal agent, as claimed in claim 1, containing a 2-(N-aryl-N-1,2,3-thiadiazolylcarbonyl-aminobutyrolactone selected from the group consisting of 2-(N-2,6-dimethylphenyl-N-1,2,3-thiadiazol-4-ylcarbonyl)-aminobutyrolactone and 2-(N-2-methyl-6-chlorophenyl-N-1,2,3-thiadiazol-4-ylcarbon yl)-aminobutyrolactone.

**Revendications** (pour les Etats contractants : BE, CH, DE, FR, GB, IT, LI, LU, NL, SE)

1. 2-(N-Aryl N-thiadiazolyl-1,2,3 carbonyl) aminobutyrolactone de la formule I

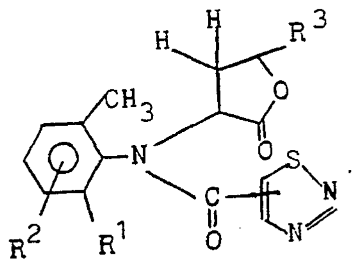

(I)

dans laquelle

$R^1$ désigne un atome d'hydrogène ou d'halogène ou un radical alcoyle en $C_1$ à $C_3$ et

$R^2$ et $R^3$ désignent chacun un atome d'hydrogène ou un radical méthyle.

2. Composition fongicide, contenant à côté d'autres additifs classiques une 2-(N-aryl N-thiadiazolyl-1,2,3 carbonyl) amino-butyrolactone suivant la revendication 1.

3. Composition fongicide, contenant à côté d'une matière support solide ou liquide une 2-(N-aryl N-thiadiazolyl-1,2,3 carbonyl) amino-butyrolactone suivant la revendication 1.

4. Procédé de préparation d'une composition fongicide, caractérisé en ce que l'on mélange une matière support solide ou liquide avec une 2-(N-aryl N-thiadiazolyl-1,2,3 carbonyl) amino-butyrolactone suivant la revendication 1.

5. Procédé de lutte contre les champignons phytopathogènes, caractérisé en ce que l'on traite les champignons ou les objets à protéger des champignons avec une 2-(N-aryl N-thiadiazolyl-1,2,3 carbonyl) aminobutyrolactone suivant la revendication 1.

6. Procédé de préparation d'une 2-(N-aryl N-thiadiazolyl-1,2,3 carbonyl) amino-butyrolactone suivant la revendication 1, caractérisé en ce que l'on fait réagir une 2-(N-aryl) amino-butyrolactone de la formule II

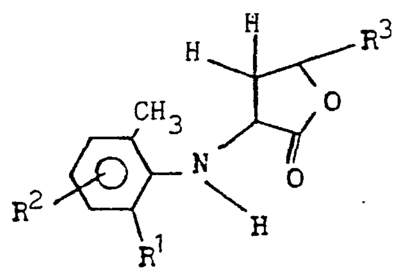

(II)

dans laquelle $R^1$, $R^2$ et $R^3$ possèdent les significations définies plus haut, à une température comprise entre 0 et 120 °C et éventuellement en présence d'un solvant ou diluant et (ou) d'une base inorganique ou organique et (ou) d'un accélérateur de la réaction, avec un dérivé d'acide carboxylique de la formule III

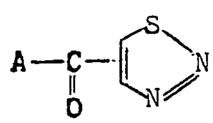

(III)

dans laquelle A représente un groupe clivable par voie nucléophile.

7. 2-(N-Aryl N-thiadiazolyl-1,2,3 carbonyl) amino-butyrolactone suivant la revendication 1, choisie parmi la 2-(N-diméthyl-2,6 phényl N-thiadiazol-1,2,3 yl-4 carbonyl) amino-butyrolactone et la 2-(N-méthyl-2 chloro-6 phényl N-thiadiazol-1,2,3 yl-4 carbonyl) amino-butyrolactone.

8. Compositions fongicides suivant la revendication 2, contenant une 2-(N-aryl N-thiadiazolyl-1,2,3 carbonyl) amino-butyrolactone choisie parmi la 2-(N-diméthyl-2,6 phényl N-thiadiazol-1,2,3 yl-4 carbonyl)

amino-butyrolactone et la 2-(N-méthyl-2 chloro-6 phényl N-thiadiazol-1,2,3 yl-4 carbonyl) amino-butyrolactone.

**Revendications** (pour l'Etat contractant AT)

1. Compositions fongicides, contenant à côté d'autres additifs classiques une 2-(N-aryl N-thiadiazolyl-1,2,3 carbonyl) amino-butyrolactone de la formule I

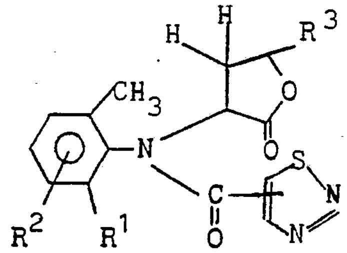

(I)

dans laquelle

$R^1$ désigne un atome d'hydrogène ou d'halogène ou un radical alcoyle en $C_1$ à $C_3$ et

$R^2$ et $R^3$ désignent chacun un atome d'hydrogène ou un radical méthyle.

2. Composition fongicide, contenant une matière support solide ou liquide et une 2-(N-aryl N-thiadiazolyl-1,2,3 carbonyl) amino-butyrolactone suivant la revendication 1.

3. Procédé de préparation de compositions fongicides, caractérisé en ce que l'on mélange une matière support solide ou liquide avec une 2-(N-aryl N-thiadiazolyl-1,2,3 carbonyl) amino-butyrolactone suivant la revendication 1.

4. Procédé de lutte contre les champignons phytopathogènes, caractérisé en ce que l'on traite les champignons ou les objets à protéger des champignons avec une 2-(N-aryl N-thiadiazolyl-1,2,3 carbonyl) amino-butyrolactone suivant la revendication 1.

5. Procédé de préparation d'une 2-(N-aryl N-thiadiazolyl-1,2,3 carbonyl) amino-butyrolactone suivant la revendication 1, caractérisé en ce que l'on fait réagir une 2-(N-aryl) amino-butyrolactone de la formule II

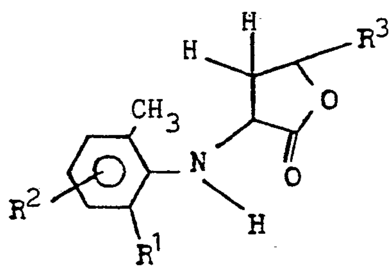

(II)

dans laquelle $R^1$, $R^2$ et $R^3$ possèdent les significations définies plus haut, à une température comprise entre 0 et 120 °C et éventuellement en présence d'un solvant ou diluant et (ou) d'une base inorganique ou organique et (ou) d'un accélérateur de la réaction, avec un dérivé d'acide carboxylique de la formule III

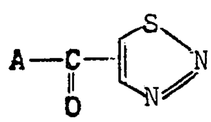

(III)

dans laquelle A représente un groupe clivable par voie nucléophile.

6. Compositions fongicides suivant la revendication 1, contenant une 2-(N-aryl thiadiazolyl-1,2,3 carbonyl) amino-butyrolactone choisie parmi la 2-(N-diméthyl-2,6 phényl N-thiadiazol-1,2,3 yl-4 carbonyl) amino-butyrolactone et la 2-(N-méthyl-2 chloro-6 phényl N-thiadiazol-1,2,3 yl-4 carbonyl) amino-butyrolactone.